Europäisches Patentamt

European Patent Office

Office européen des brevets

(11) Publication number: **0 370 545**
A2

(12) **EUROPEAN PATENT APPLICATION**

(21) Application number: 89202728.5

(22) Date of filing: 30.10.89

(51) Int. Cl.⁵: **B62B 13/14**

(30) Priority: 21.11.88 IT 2217588 U

(43) Date of publication of application:
30.05.90 Bulletin 90/22

(84) Designated Contracting States:
AT CH DE ES FR IT LI SE

(71) Applicant: MANGHEN s.r.l.
Via Affo 1
I-43100 Parma(IT)

(72) Inventor: Capra, Silvano
Via Villa 1
I-38050 Carzano Trento(IT)

(74) Representative: De Carli, Erberto et al
ING. BARZANO' & ZANARDO MILANO S.p.A.
Via Borgonuovo, 10
I-20121 Milano(IT)

(54) **High-safety shoe sledge.**

(57) A high-safety shoe sledge comprising a chassis
(11,l2) associated with sliding shoes (14) which are
suitable for sliding on snow, or the like, a seat (18)
situated above the chassis, a direction-governing apparatus constituted by a steering element (16) and a
relevant steering column (17) for the steering ele-
ment, by triple-hinge means (15) interposed between
the chassis and the shoes, and remote-control
means, for remote-controlling, by means of the
steering element, the steering movements of said
shoes (14), characterized in that with at least one
pair of said triple-hinge means (15),remote-control-
lable braking elements (19) are associated. Further
said shoe sledge is provided with a hooking device
(30).

**Fig.1**

# HIGH-SAFETY SHOE SLEDGE

The present finding is concerned with a high-safety shoe sledge.

Shoe sledges are known, which are endowed with good manoeveurability and governability, but which, in case of fall of, or of an accidental abandonment by, the user on a slope, cannot be easily immobilized or stopped in case they accidentally start moving down the slope, or, what is particularly dangerous, start going in reverse.

Furthermore, such a type of sledges suffer from the problem that they cannot be easily brought back atop the slope to slide down along, in that they cannot be transported by means, or on board, of the common lift facilities, or cannot make use of them.

A purpose of the present finding is of providing a shoe sledge, equipped with a direction control means, which is equipped with a stopping device, to stop the vehicle either when it is in a resting condition -- or is temporarily parked -- or while it is being used, either in case of a fortuitous fall of the user, or when said user wishes to stop or brake the sledge, or, last but not least, in case the sledge accidentally starting going in reverse.

A further purpose is of providing a · sledge which is capable of getting connected with a lift facility of ski-lift type, in order to use it.

These purposes according to the present invention are achieved by providing a high-safety shoe sledge comprising a chassis associated with said sliding shoes, with said shoes being suitable for sliding on snow, or the like, a seat situated above said chassis, a direction-governing apparatus constituted by a steering element and a relevant steering column for said steering element, by triple-hinge means interposed between said chassis and said shoes, and remote-control means, for remote-controlling, by means of said steering element, the steering movements of said shoes, characterized in that with at least one pair of said triple-hinge means, remote-controllable braking elements are associated.

Preferably, the shoe sledge according to the present invention is equipped with a longitudinal bar articulatedly connected with said chassis, and situated in a central region of said chassis, which longitudinal rod bears, pivoted onto its free end, a hooking device, which hooking device comprises a pair of red elements positioned at an angle to each other, wherein a first one of said rod elements bears a sledge-dragging fork, and a second one of said rod elements interacts with said chassis by means of locking elements suitable for being activated manually.

The characteristics and advantages of a sledge according to the present invention will be better understood from the following exemplifying, non-limitative, disclosure thereof, made by referring to the hereto attached schematic drawings in which:

- Figure 1 shows an elevation view of the sledge according to the present invention with its seat being in its lowered position, notwithstanding the absence of the user;

- Figure 2 shows an at least partial top view of the sledge of Figure 1, with braking elements connected with the seat only;

- Figure 3 shows a top view of a magnified detail of Figure 2;

- Figure 4 shows a front elevation view of a magnified detail of Figure 1;

- Figure 5 shows a magnified top view of a braking element coupled with a rear shoe;

- Figure 6 shows a magnified detail of the hooking device while it is being connected with a lift facility;

- Figure 7 shows a magnified view of a portion of the sledge of Figure 1, with the braking elements being actuated.

Referring to the figures, a shoe sledge according to the present invention, generally indicated by the reference numeral 10, is of the type essentially comprising a chassis associated with shoes 14 sliding on snow.

The chassis is constituted by a front portion 11 and a rear portion 12 united to each other by means of the interposition of elastic elements, such as leaf springs 13, and of shoch-absorbing elements, such as a shock absorber 29 of hydraulic type, which constitute a springing system.

The chassis 11, 12 is associated with the shoes 14 through triple-hinge means, generally indicated by the reference numeral 15 and such as to enable the shoes to move according to three axes orthogonal to one another.

The sledge 10 is furthermore equipped with a direction governing apparatus constituted by a steering element 16 which, through a relevant steering column 17, is capable of determining, thanks to the presence of the triple-hinge means 15, both the rotation of at least the front shoes, in order to cause the sledge to change its traveling direction, as well as the inclination and the rotation in order to obtain an edge-gripping traveling position of the same shoes, which makes it possible both a change in direction to be carried out perfectly, and the sledge to slide down on snow-covered slopes.

Above the front portion 11 of said chassis, and on the rear side thereof, an inclined seat-back portion 9 extends upwards, and a tip-up seat 18 is furthermore provided. In particular, the shock absorber 29 results to be positioned between said seat-back portion 9 and said rear portion 12 of the chassis.

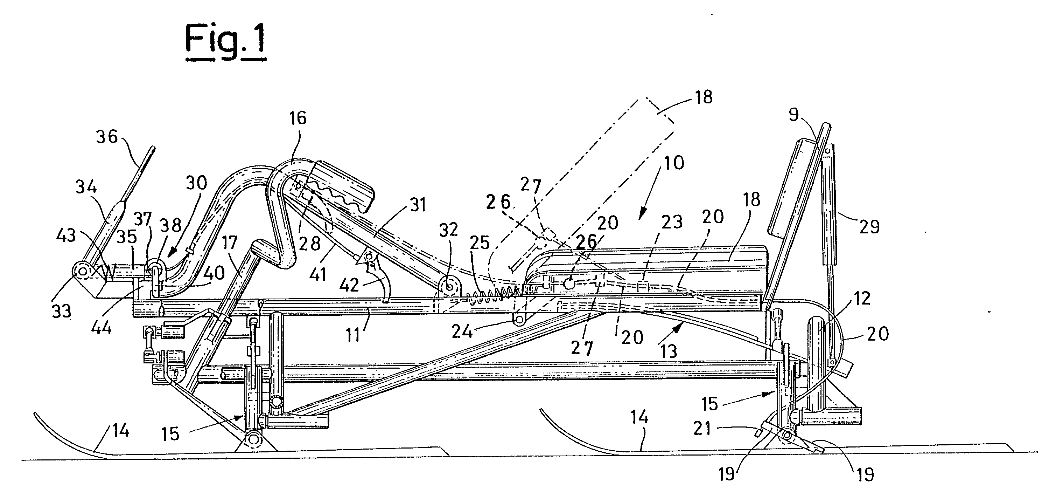

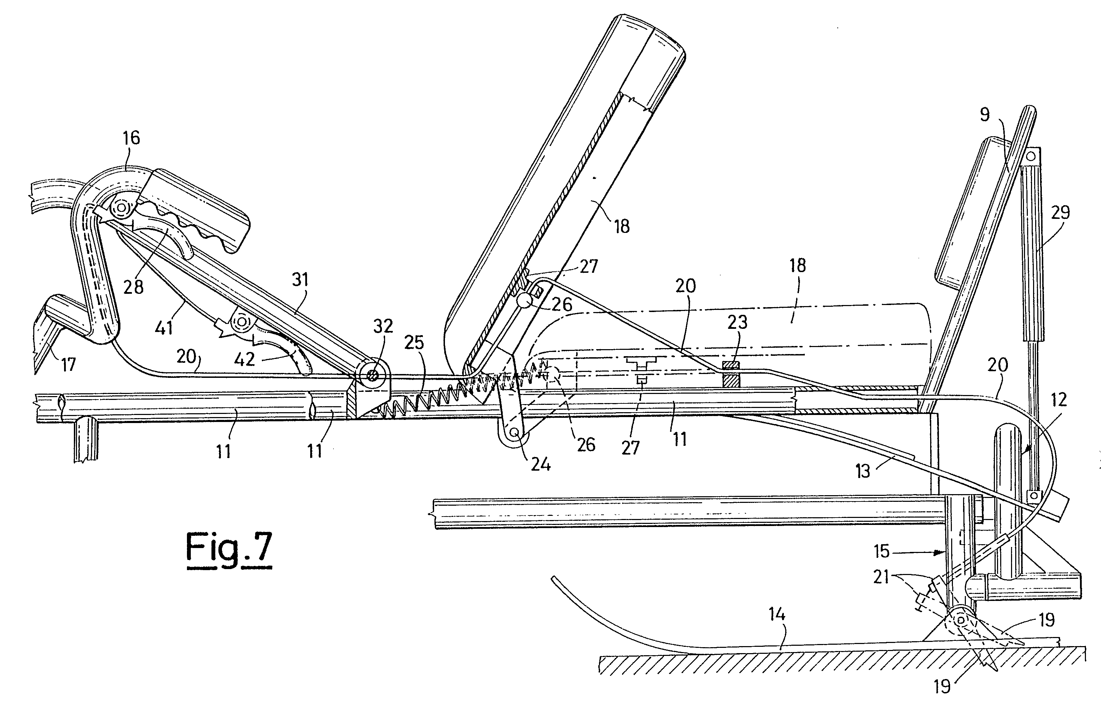

In correspondence of the rear pair of the triple hinge means 15, braking elements are hinged, such as lever elements 19, horizontally pivoted, moveable between a lifted, idling position above said shoes 14 (Figure 1) and a lowered, operating position, extending downwards under said shoes 14 (Figure 7).

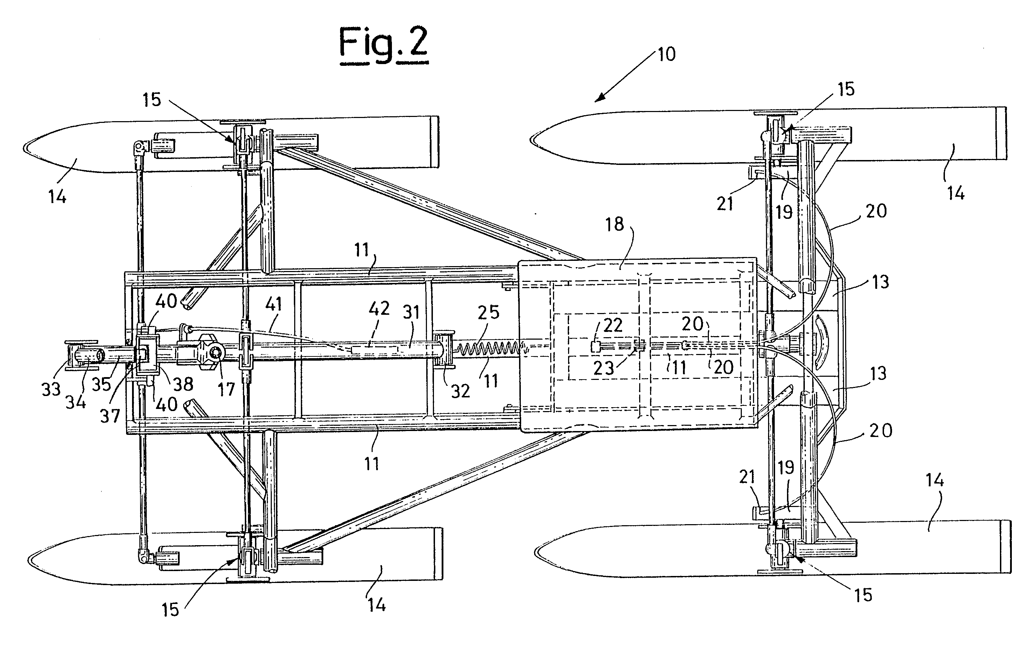

The position of said lever elements 19 can be controlled by means of remote control means consisting of bowdens 20, which are connected at one of their ends, i.e., their end 21, with said lever elements 19, and at their other end, i.e., their end 22, are fixed to a bottom portion of said seat 18 (Figure 2), with both bowdens 20 being of course united to each other and a reaction block 23 integral with the chassis portion 11 being provided.

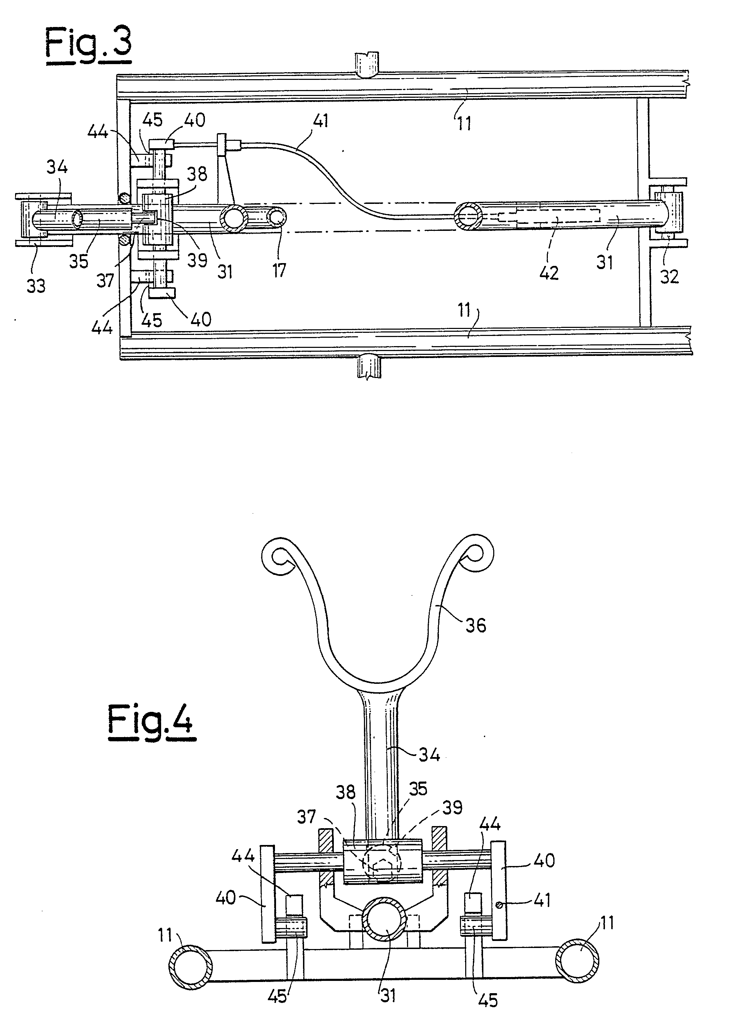

One should furthermore observe that the seat 18 is hinged in 24, in its longitudinal side, inside the interior of the sledge, relatively to the chassis 11, so as to be capable of being rotated between an essentially horizontal position (Figure 2), in which position said seat is into contact with the same chassis, and a rotated and lifted position (similar to as shown in Figure 4), which causes the bowdens 20 to be pulled and the lever elements 19 to be lowered into their lowered, operating position, with said elements thus acting as braking/blocking elements in order to brake and block the sledge 10.

An elastic element, such as a traction spring 25, is interposed between, and respectively constrained to, said chassis portion 11 and said seat 18 so that, in its resting position, said spring keeps the same seat in its rotated and lifted position (Figure 7), so as to enable the "braked-sledge" position.

According to a preferred form of practical embodiment, the constraint, hereinabove indicated by means of the reference numeral 22, between an end of the combined bowdens and the seat, is replaced by an enlarged element of ball shape 26, provided on the combined bowdens 20, and acting as a lock element sliding relatively to a constraint element consisting of a ring 27 extending under the seat 18 (Figures 1 and 7). It is interesting to observe that the wire of the combined bowdens continues beyond the ball-shaped element 26 for such a length as to come to be positioned on the steering element 16, in which it can be controlled by means of a control lever 28, in the same way as a braking element is controlled, e.g., in a bicycle.

One can thus understand how the braking of the sledge in case of an accidental fall of the sledge user can be carried out automatically owing to the intervention of the spring 25 and the rotation of the seat 18 whose ring 27, by engaging the ball-shaped 26, pulls the bowden 20, or can be carried out by means of the direct actuation of the lever elements 19 by the user, when the sledge has to be stopped, by acting on the control lever 28 provided on the steering element 16.

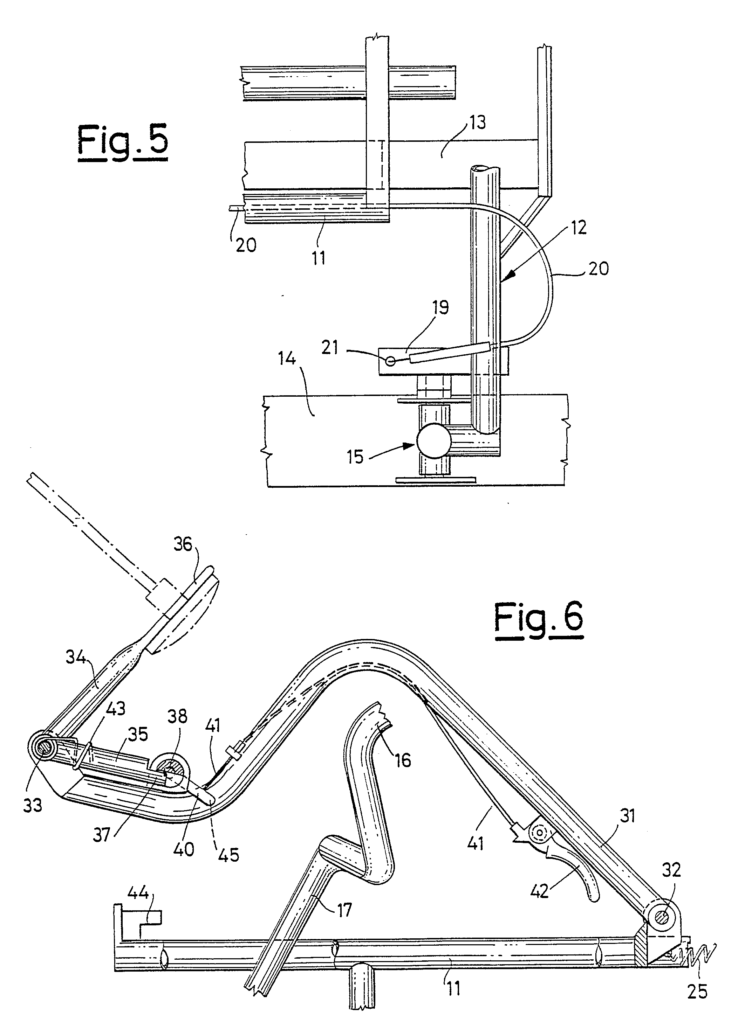

Furthermore, the shoe sledge 10 according to the present invention is advatageously equipped in the front portion 11 of the chassis, with a hooking device, generally indicated by the reference numeral 30, which makes it possible the same sledge to be connected with a lift facility of ski-lift type, such as a ski-lift, wherein dragging disks 46 (shown in chain line in Figure 6) are integral with a running cable by means of cable portions, in a known way, not shown in the hereto attached figures.

The hooking device 30 comprises a shaped longitudinal rod 31 articulatedly linked at one of its ends, i.e., at its end 32, onto a central portion of the portion 11 of the chassis of the sledge.

On its other, free, shaped, end, the longitudinal rod 31 bears, hinged in 33, a "V"-shaped rod, which is the true hooking element, and is constituted by a pair of rod elements 34 and 35 positioned at an angle to each other. In the herein depicted example, said rod elements 34 and 35 are at an acute angle to each other. The first rod element 34 ends with a dragging fork 36, and the second rod element 35 has a nose 37 provided on its free end.

On said longitudinal rod 31, a pivot 38 is furthermore rotatably supported on relevant brackets, which pivot 38 has, in its central portion, a radial notch 39 such as to enable the nose 37 to run through its interior in a particular position thereof, so that the hooking element can rotate, thus releasing the dragging disk (not shown) of the lift facility, or is prevented from rotating, with the locking thereof being hence accomplished.

Such a pivot 38 is so rotated as to reach its position in which the notch 39 is correctly positioned, by means of a pair of levers 40 integral with, and on both of opposite sides of, said pivot 38. One of said levers 40 is actuated by means of a second bowden 41. Such a bowden 41 is essentially positioned along the longitudinal rod 31 and can be actuated by means of a second lever 42, similar to the first lever 28 and articulatedly integral with the same rod 31.

A further spring 43 is wound around the rod element 35 and interacts with the longitudinal rod 31, so as to keep the hooking element close to the same rod when said hooking element is in its normal resting position (Figure 1).

From the bottom portion 11 of the chassis, to which the hooking device 30, or, better, an end portion of the longitudinal rod 31 comes to rest, tooth elements 44 extend which, besides receiving the rod 31 between each other, are suitable for getting hooked with complementary, shaped hooking extensions 45 which constitute the ends of the levers 40, and thus accomplish a tooth ratchet gear system.

As shown in a preferred, non-limitative, form of practical embodiment depicted in the figures, the steering element 16 has the shape of a handle-bar, which can bear the braking means control lever 28.

By applying said particular devices as hereinabove disclosed, a considerable safety of use of the sledge, as well as a stable positioning of said sledge, and the possibility of using the lift facilities are achieved.

In fact the user, by means of the braking elements and their manual actuation by means of the control lever 28 can intervene, while the sledge is running, causing it to slow down, or even to stop. On the contrary, should the user accidentally fall from the sledge, the seat 18, through the traction spring 25, which causes it to rotate upwards, thus being moved away from the chassis portion 11, determines an action of automatic braking of the sledge, a stop thereof with the possibility of a fast recovery, while simultaneously preventing said sledge from continuing sliding down the slope, which might endanger persons possibly standing in the nearby.

A last advantageous use of the braking elements is accomplished when the sledge is temporarily parked, because, as said, lifting the seat causes the lever elements 19 to be moved downwards, and the sledge to be consequently stopped and blocked against both forwards and rearwards movements.

The use of the hooking device 30 is of particular interest as well. In fact, whilst when the sledge is being normally used to slide down a slope, the longitudinal rod with the relevant hooking device 30 is stably fastened to the frame 11, as shown in Figure 1, when one wants to accomplish the dragging of the sledge by means of a drive disk 46, he should simply act on the second lever 42, so as to enable the rod 31 to rotate together with the relevant hooking device 30.

The actuation of the second lever 42 by means of the second bowden 41 promotes the rotation of the pivot 38, so as to simultaneously disengage the hooking extensions 45 of the tooth elements 44 integral with the chassis 11, and lock, by means of the same pivot 38, the nose 37 relatively to the rod 31. In such a way, the sledge dragging position shown in Figure 6 is accomplished.

When the sledge has come to the end of the lift run, the simple release of the lever 42 by the user will cause the pivot 38 to rotate until it reachs its resting position, so that the nose 37, by entering the notch 39, makes it possible the "V"-shaped rod to get disengaged: the "V"-shaped rod will thus rotate, getting disengaged from the drive disk 46. The presence of the spring 43 brings at once the "V'-shaped rod back into its position close to the longitudinal rod 31, so that the same rod 31 can then be easily rotated to get closer to the chassis 11, in order to get engaged with said chassis 11 by means of the engagement of the hooking extensions 45 with the tooth elements 44, with the sledge being given its ready-to-use configuration.

Advantageously, the chassis of the sledge 10, consisting of two chassis portions 11 and 12 connected with each other through the leaf springs 13 and the shock absorbed 29 accomplish an "elastic suspension", which improves the adhesion of the sledge to the ground and render rather comfortable the use thereof, without the user experiencing sharp stresses.

## Claims

1. High-safety shoe sledge comprising a chassis associated with said sliding shoes, with said shoes being suitable for sliding on snow, or the like, a seat situated above said chassis, a direction- governing apparatus constituted by a steering element and a relevant steering column for said steering element, by triple-hinge means interposed between said chassis and said shoes, and remote- control means, for remote-controlling, by means of said steering element, the steering movements of said shoes, characterized in that with at least one pair of said triple-hinge means, remote-controllable braking elements are associated.

2. Shoe sledge according to claim 1, characterized in that each one of said braking means associated with said hinge means is at least one lever element horizontally pivoted, moveable between a lifted, idling position above said shoes and a lowered, operating position, extending downwards under said shoes.

3. Shoe sledge according to claim 1, characterized in that said braking elements are actuated by relevant bowdens connected with a portion of the seat of the sledge, with said seat being hinged onto said chassis in one of its sides, and between said seat and said chassis an elastic element being furthermore interposed, which tends to keep said seat, in its resting position, lifted and rotated relatively to said chassis, as well as said braking elements operatively actuated.

4. Shoe sledge according to claim 1, characterized in that said braking elements are actuated by relevant bowdens which are united to each other into one single wire, are sliding inside an element for sliding constraint integral with said seat, and at their free end are connected with a control lever integral with said steering element, with an enlarged element cooperating with said sliding constraint element, said enlarged element being integral with said single wire and being provided beyond said sliding constraint element towards said control lever.

5. Shoe sledge according to claim 1, characterized in that said chassis comprises a front portion and a rear portion connected with each other with the interposition of elastic connection elements and at least one shock absorbing element.

6. Shoe sledge according to claim 5, characterized in that said elastic connection elements are leaf springs.

7. Shoe sledge according to claim 5, characterized in that said at least one shock absorbing element is installed between a seat-back portion extending from said front chassis portion, and said rear chassis portion.

8. Shoe sledge according to claim 1, characterized in that said sledge is equipped with a longitudinal bar articulatedly connected with said chassis, and situated in a central region of said chassis, which longitudinal rod bears, pivoted onto its free end, a hooking device, which hooking device comprises a pair of rod elements positioned at an angle to each other, wherein a first one of said rod elements bears a sledge dragging fork, and a second one of said rod elements interacts with said chassis by means of locking elements suitable for being activated manually.

9. Shoe sledge according to claim 8, characterized in that said locking elements are constituted by a pivot rotatably supported on said longitudinal rod, and provided in its central region with a notch , with said pivot being driven to rotate by a lever which is caused to rotate by a bowden, so as to selectively engage a nose provided at a free end of said second rod element, with an elastic means being interposed, and interacting, between said second rod element and said longitudinal rod, so as to keep them, in their resting position, close to each other.

Fig.1

EP 0 370 545 A2

Fig.2

## Fig.3

## Fig.4

## Fig.5

## Fig.6

Fig.7

EP 0 370 545 A2